**Europäisches Patentamt**

(19) **European Patent Office**

**Office européen des brevets**

(11) Veröffentlichungsnummer: **0 100 295**
**B1**

(12) # EUROPÄISCHE PATENTSCHRIFT

(45) Veröffentlichungstag der Patentschrift:
**01.04.87**

(51) Int. Cl.⁴: **B 32 B 25/06,** B 29 C 41/30,
B 32 B 31/30, B 42 D 3/00,
D 21 H 5/00

(21) Anmeldenummer: **83730077.1**

(22) Anmeldetag: **29.07.83**

(54) **Anwendung eines Verfahrens zum Beschichten der Oberflächen von Pappenzuschnitten.**

(30) Priorität: **30.07.82 DE 3229014**

(43) Veröffentlichungstag der Anmeldung:
**08.02.84 Patentblatt 84/6**

(45) Bekanntmachung des Hinweises auf die Patenterteilung:
**01.04.87 Patentblatt 87/14**

(84) Benannte Vertragsstaaten:
**AT BE CH DE FR GB IT LI NL SE**

(56) Entgegenhaltungen:
**DE - A - 2 530 477**
**DE - A - 2 659 192**
**DE - B - 1 090 060**
**DE - U - 1 875 850**
**US - A - 3 486 955**
**US - A - 3 798 107**

**Verpackungs-Rundschau 6/1971, Seiten 772-776**

(73) Patentinhaber: **Herlitz Aktiengesellschaft,
Reuchlinstrasse 10-17, D-1000 Berlin 21 (DE)**

(72) Erfinder: **Haas, Helmut, Höfen 13, D-8082 Grafrath (DE)**

(74) Vertreter: **Presting, Hans-Joachim et al,
Patentanwaltsbüro Meissner & Meissner
Herbertstrasse 22, D-1000 Berlin 33 West (DE)**

## Beschreibung

Die Erfindung betrifft die Anwendung eines Verfahrens zum Beschichten der Oberflächen von Pappenzuschnitten mit Kunststoff, bei dem auf einzelne Pappenzuschnitte beidseitig eine extrudierte Kunststoffolie im Zustand der Zähflüssigkeit unmittelbar aufgebracht wird.

Es ist bekannt, Pappenzuschnitte, die zur Herstellung von Aktenordnern oder dergleichen dienen, zu kaschieren oder mit einem aus PVC-Folie bestehenden Überzug zu versehen. Letzterer wird in einem relativ aufwendigen Verfahren aufgebracht, d.h., man geht von fertigen Folien aus, die mittels Leim mit den Oberflächen des Pappenzuschnitts verklebt und an den Kanten bzw. Rändern miteinander verschweisst werden. Abgesehen von dem erforderlichen Arbeitsaufwand ist es teuer, fertige Folien verwenden zu müssen, die aus Verarbeitungsgründen eine bestimmte Mindestdicke von etwa 180 µm haben müssen. Bei der bisher praktizierten Herstellungsweise tritt zudem noch ein ziemlicher Abfallanteil an der verarbeiteten PVC-Folie auf.

Zur Herstellung von sogen. Tisch-Sets oder dergl. ist durch die US-A-3 798 107 eine Vorrichtung bekannt, mittels der Papier- oder Stoffzuschnitte beidseitig extrusionsbeschichtet werden, wobei grosse miteinander verbundene Randüberstände der Beschichtungsfolien bestehen bleiben.

Der Erfindung liegt die Aufgabe zugrunde, mit sehr geringem Arbeits- und Materialaufwand eine den bisherigen Beschichtungen zumindest gleichwertige Beschichtung von Pappenzuschnitten zu erreichen.

Diese Aufgabe wird erfindungsgemäss mit den im Kennzeichen des Patentanspruchs 1 angegebenen Merkmalen gelöst.

Weitere Merkmale gehen aus den Unteransprüchen hervor.

Der mit der Erfindung erzielte Vorteil besteht darin, dass sie zu einem – gemessen am Stand der Technik – in qualitativer Hinsicht gleichwertigen Produkt führt, das sich aber wesentlich billiger herstellen lässt und bei dessen Erzeugung keine umweltfeindlichen Abfälle entstehen, deren Beseitigung problematisch und mit Kosten verbunden ist. Da Aktenordner und Ringbücher Massenartikel mit einer Jahresstückzahl von mehreren Millionen sind, ergibt sich ein hoher volkswirtschaftlicher Nutzen.

Weil sich als Ausgangsmaterial für die Folie preiswertes, beliebig einfärbbares Polyäthylen- oder Polypropylengranulat verwenden und sich eine Beschichtungsdicke von weit unter 80 µm, beispielsweise 50 µm, verwirklichen lässt, ist der Kosten- und Materialaufwand äusserst gering.

Das Verfahren ist aus den Patentansprüchen ausreichend verständlich, so dass es einer weiteren Beschreibung nicht bedarf. Zur Durchführung des Verfahrens sind bekannte, in geeigneter Weise modifizierte Extrudiervorrichtungen mit Breitschlitzdüse(n) verwendbar.

## Patentansprüche

1. Anwendung eines Verfahrens zum Beschichten der Oberflächen von Pappenzuschnitten mit Kunststoff, bei dem auf einzelne Pappenzuschnitte beidseitig eine extrudierte Kunststoffolie im Zustand der Zähflüssigkeit unmittelbar aufgebracht wird, dadurch gekennzeichnet, dass zur Herstellung von Aktenordnern oder Ringbüchern geringe Randüberstände der Folien erzeugt werden, die an die Seiten- und Stirnflächen des Zuschnitts angelegt werden.

2. Anwendung nach Anspruch 1, dadurch gekennzeichnet, dass das Anlegen der Randüberstände durch Anblasen mittels Heissluftstroms vorgenommen wird.

3. Anwendung nach Anspruch 1, dadurch gekennzeichnet, dass das Anlegen der Randüberstände mittels Andruckrollen vorgenommen wird.

4. Anwendung nach Anspruch 1, dadurch gekennzeichnet, dass als Material für die Kunststoffolie Polyäthylen- oder Polypropylengranulat verwendet wird.

## Claims

1. Use of a method for the coating of the surfaces of carboard cut blanks with plastic, in which an extruded plastic foil in viscous state is applied directly on both sides onto individual cardboard cut blanks, characterized in that for the manufacture of files or ring binders, small marginal projections of the foils are produced, which are laid against the side- and front faces of the cut blank.

2. Use according to Claim 1, characterized in that the laying of the marginal projections is carried out through blowing by means of a current of hot air.

3. Use according to Claim 1, characterized in that the laying of the marginal projections is carried out by means of pressure rollers.

4. Use according to Claim 1, characterized in that granulated polyethylene or-polypropylene is used as the material for the plastic foil.

## Revendications

1. Application d'un procédé pour enduire les surfaces de pièces découpées de carton avec une matière synthétique, dans lequel une feuille de matière synthétique extrudée est appliquée directement à l'état visqueux des deux côtés de pièces de carton individuelles, caractérisée en ce que, pour réaliser des classeurs de dossiers ou des livres à feuilles mobiles, de faibles extrémités de bord en saillie des feuilles sont créées, lesquelles sont appliquées sur les surfaces latérales et frontale de la pièce découpée.

2. Application selon la revendication 1, caractérisée en ce que l'application des extrémités de bord en saillie est réalisée par soufflage au moyen d'un courant d'air chaud.

3. Application selon la revendication 1, caractérisée en ce que l'application des extrémités de bord en saillie est réalisée au moyen de galets de pression.

4. Application selon la revendication 1, caractérisée en ce que, comme matière pour les feuilles en matière synthétique, on utilise des granulés de polyéthylène ou de polypropylène.